# EUROPÄISCHE PATENTSCHRIFT

(11) **EP 0 742 283 B1**
(45) Veröffentlichungstag und Bekanntmachung des Hinweises auf die Patenterteilung: **11.08.2004**
(21) Anmeldenummer: 96107490.3
(22) Anmeldetag: 10.05.1996
(51) Int. Cl.: C12C 13/00

(54) **Anlage und Verfahren zur Reinigung von beim Würzekochen bei der Bierherstellung anfallenden Brüdenkondensaten**
Apparatus and method of cleaning vapour condensate produced during the boiling of the wort in the beer production
Appareil et procédé de nettoyage du condensat de vapeur produit lors de l'ébullition du moût au cours de la préparation de la bière

(30) Priorität: 12.05.1995 DE 19516969
(43) Veröffentlichungstag der Anmeldung: 13.11.1996
(73) Patentinhaber: Hrch. Huppmann GmbH, 97318 Kitzingen (DE)
(72) Erfinder: Lenz, Bernhard, 97318 Kitzingen (DE); Lenz, August, 97318 Kitzingen (DE)
(74) Vertreter: Böck, Bernhard, Dipl.-Ing.

(56) Entgegenhaltungen:
- EP-A- 0 530 766
- EP-A- 0 709 130
- DE-A- 3 925 343
- DE-A- 4 302 319
- DE-A- 19 544 336
- DE-C- 4 121 382
- DE-C- 4 442 393
- US-A- 4 801 375
- US-A- 5 017 291
- US-A- 5 122 233
- US-A- 5 244 579

## Beschreibung

Die Erfindung betrifft eine Anlage und ein Verfahren zur Reinigung von bei der Bierherstellung anfallenden Brüdenkondensaten.

Bei der Bierherstellung wird die durch Abläutern der Maische und das anschließende Auswaschen der Treber gewonnene Würze in einer Würzepfanne gekocht. In diesem Kochvorgang soll neben einer Reihe anderer verfahrenstechnischer Wirkungen die gewünschte Würzekonzentration durch Verdampfen überschüssigen Wassers erzielt werden. Die dabei entstehenden Brüden werden üblicherweise in einem speziellen Wärmetauscher, z.B. einem Pfannendunstkondensator, kondensiert, wobei die den Brüden innewohnende Wärme zu einem erheblichen Anteil zurückgewonnen werden kann. Das im Pfannendunstkondensator anfallende Kondensat enthält eine Reihe insbesondere organischer Bestandteile, beispielsweise Phenyl- und Benzylethanol, 2- und 3-Methyl-Butanal und -Butanol, Pentanol, Hexanol, N-Heterocyklen, DMS und Polyphenole, die eine Wiederverwendung dieses Kondensates insbesondere als Brauwasser, aber auch als Betriebswasser, beispielsweise Kesselspeisewasser oder dergleichen, ausschließen. Daher wird üblicherweise das im Pfannendunstkondensator anfallende Kondensat mittelbar oder unmittelbar in die Kanalisation abgeleitet. Da diese Kondensate in erheblichen Mengen anfallen und die Abwassergebühren nach der eingeleiteten Kondensatmenge berechnet werden, stellt die Ableitung dieser Kondensate in das Abwassersystem einen erheblichen Kostenfaktor dar. Das Verwerfen derartiger Abwassermengen ist zudem ökologisch nicht unbedenklich.

Weiter fallen bei der Bierherstellung beispielsweise Brüdenkondensate aus der mechanischen Brüdenverdichtung sowie Mischkondensate, beispielsweise aus der thermischen Brüdenverdichtung, an. Auch diese Kondensate werden üblicherweise in die Kanalisation abgeleitet.

Aus der EP-A-0 530 766 ist eine Anlage zur Aufbereitung einer wässrigen Lösung mit einer Druckpumpe, einem RO-Modul und einer Ablaufleitung für Konzentrat und Permeat bekannt.

Ausgehend von diesem Stand der Technik ist es Aufgabe der vorliegenden Erfindung eine Vorrichtung und ein Verfahren zur Behandlung von bei der Bierherstellung anfallenden Brüdenkondensaten vorzuschlagen.

Diese Aufgabe wird durch eine Vorrichtung nach der Lehre des Anspruchs 1 und durch ein Verfahren nach der Lehre des Anspruchs 14 gelöst.

Vorteilhafte Ausgestaltungen der Erfindung sind Gegenstand der Unteransprüche.

Gattungsgemäß werden die anfallenden Brüdenkondensate dergestalt gereinigt, daß zumindest ein erheblicher Anteil des so gereinigten Abwassers zumindest als Betriebswasser, beispielsweise Kesselspeisewasser, vorzugsweise jedoch als Brauwasser in der Brauerei wiederverwendet werden kann. Da die in den Brüdenkondensaten gelösten, insbesondere organischen, Bestandteile durch ein herkömmliches Filterverfahren nicht oder nicht im gewünschten Umfang aus dem Kondensat ausgeschieden werden können, wird erfindungsgemäß das zu reinigende Brüdenkondensat einem Umkehr-Osmose-Vorgang unterzogen. Dabei wird das zu reinigende Kondensat mittels einer Druckpumpe unter hohem Druck an die semipermeable Membran eines RO-Moduls (Reverse Osmosis-Moduls) geführt, wobei aufgrund des Druckes, der in jedem Fall höher als der osmotische Druck des Kondensates sein muß, nahezu reines Wasser durch die semipermeable Membran hindurchdiffundiert und als Permeat ableitbar ist. Der Druck bzw. der Betriebsdruck des Kondensates beträgt dabei vorzugsweise zwischen 30 und 60 bar, insbesondere in etwa 40 bar. Mit zunehmendem Druck steigt dabei die Permeabilität der Membran für Wasser, wohingegen die Durchlässigkeit für die Substanzen, die zurückgehalten werden sollen, in etwa konstant bleibt. Das durch die semipermeable Membran abgehaltene Konzentrat wird erfindungsgemäß unmittelbar in die Kanalisation abgeleitet oder aber zunächst in einem Zwischenspeicher oder dergleichen gespeichert.

Erfindungsgemäß ist an der Anlage eine Abgabeleitung vorgesehen, über die das Permeat einer Wiederverwendung zugeführt werden kann.

Die erfindungsgemäße Anlage weist mindestens eine Druckpumpe zur Druckbeaufschlagung des zu reinigenden Brüdenkondensates und ein eine semipermeable Membran aufweisendes RO-Modul, durch das das Brüdenkondensat mittels der Druckpumpe unter Trennung in Permeat und Konzentrat förderbar ist, auf. Ferner sind erfindungsgemäß mindestens eine Ablaufleitung für das Konzentrat zur mittelbaren oder unmittelbaren Ableitung in die Kanalisation vorgesehen. Das gereinigte Permeat ist zur Wiederverwendung sammelbar.

In grundsätzlich beliebiger Weise können die beispielsweise vom Pfannendunstkondensator kommenden Kondensate unmittelbar der Druckpumpe zugeleitet werden. Nach einem bevorzugten Ausführungsbeispiel der Erfindung jedoch wird zunächst einmal zwischen der Druckpumpe und dem Pfannendunstkondensator ein Vorlagebehälter angeordnet, der zur Zwischenspeicherung des zu reinigenden Brüdenkondensates dient. Dabei kann dieser Vorlagebehälter insbesondere als Pufferspeicher agieren, wodurch ein kontinuierlicher Betrieb der erfindungsgemäßen Anlage möglich ist.

Zur Förderung des zu reinigenden Brüdenkondensates aus dem Vorlagebehälter ist vorzugsweise zwischen dem Vorlagebehälter und der Druckpumpe eine Vorlagepumpe angeordnet. Diese Vorlagepumpe weist dabei ausschließlich Transportfunktion auf. Eine Druckerhöhung auf den Betriebsdruck des RO-Moduls wird durch diese Vorlagepumpe nicht bewirkt.

Gemäß einem Ausführungsbeispiel ist auf der Permeatablaufseite des RO-Moduls ein Sammelbehälter angeordnet, der zur Aufnahme des durch die semipermeable Membran hindurchgetretenen Permeates dient. Wenngleich auch hier in grundsätzlich beliebiger Weise eine unmittelbare Wiederverwendung des Permeates möglich wäre, dient dieser Sammelbehälter insbesondere dazu, einen kontinuierlichen Betrieb der gesamten Anlage zu gewährleisten.

Bestimmungsgemäß werden im RO-Modul praktisch alle organischen Verunreinigungen abgesondert, die die Verwendung des Permeates als Betriebswasser beeinträchtigen könnten. Um jedoch dennoch möglicherweise durch die semipermeable Membran hindurchgetretene Verunreinigungen zuverlässig auszufiltern, kann nach einem weiteren Ausführungsbeispiel der Erfindung auf der Permeatablaufseite des RO-Moduls eine vom Permeat durchströmbare Aktivkohle-Filtereinheit angeordnet sein. Diese Aktivkohle-Filtereinheit fungiert dabei lediglich als Sicherheitsvorrichtung.

Während auf der Konzentrat- bzw. Kondensatseite des RO-Moduls der volle durch die Druckpumpe aufgebrachte Betriebsdruck herrscht, tritt das Permeat nahezu drucklos aus dem RO-Modul aus. Ebenso erfolgt gegebenenfalls die Speicherung des Permeates im Sammelbehälter mehr oder weniger drucklos. Nach einem weiteren Ausführungsbeispiel ist daher auf der Permeatablaufseite des RO-Moduls eine Druckerhöhungspumpe für das Permeat angeordnet, die zum einen zum Transport des Permeates und zur Einleitung des Permeates in ein Leitungssystem und zum anderen zur Förderung des Permeates durch die Aktivkohle-Filtereinheit dient. Die Druckerhöhung erfolgt dabei auf Permeatdruckwerte zwischen 3 und 10 bar, insbesondere in etwa 5 bar.

Der Reinigungswirkungsgrad der erfindungsgemäßen Anlage hängt unter anderem ganz wesentlich vom zulässigen Betriebsdruck des RO-Moduls ab. Grundsätzlich gilt, daß die Permeatausbeute um so höher ist, je größer der durch die Druckpumpe aufgebrachte Betriebsdruck ist. Dieser zulässige Druck ist jedoch insbesondere durch die mechanischen Eigenschaften der semipermeablen Membran und des RO-Moduls insgesamt begrenzt. Um dennoch den Gesamtwirkungsgrad der erfindungsgemäßen Reinigungsanlage bzw. des erfindungsgemäßen Verfahrens zu erhöhen, ist gemäß einem besonders bevorzugten Ausführungsbeispiel der Erfindung eine zuschaltbare Rückführungsleitung für das durch die semipermeable Membran zurückgehaltene und aus dem RO-Modul ausgetretene Konzentrat vor die Druckpumpe zur erneuten Durchströmung des RO-Moduls vorgesehen. Dies bedeutet mit anderen Worten, daß das aus dem RO-Modul austretende Konzentrat einem oder mehreren Umkehr-Osmose-Vorgängen unterzogen werden kann, wobei bei jedem dieser Umkehr-Osmose-Vorgänge eine stärkere Aufkonzentrierung des Konzentrates mit den organischen Verunreinigungen erfolgt. Aufgrund dieser Gestaltung und Verfahrensführung läßt sich in einfacher Weise ein Gesamtwirkungsgrad der Anlage von mehr als 90 % erzielen.

Eine Mehrfachreinigung des Konzentrates ist gemäß der Erfindung auch dadurch möglich, daß in einfacher Weise mehrere RO-Module in Reihe so hintereinander geschaltet werden, daß der Konzentratablauf jeweils eines vorgeschalteten RO-Moduls unmittelbar oder mittelbar in ein nachgeschaltetes RO-Modul mündet, wobei das Konzentrat dort erneut einem Reinigungsvorgang unterworfen wird.

Insbesondere bei größeren Anlagen, das heißt Anlagen, bei denen größere Mengen an Brüdenkondensaten erfindungsgemäß aufgearbeitet bzw. gereinigt werden sollen, ist eine sogenannte Tannenbaumanordnung mehrerer RO-Module von Vorteil. Dabei sind zunächst in einer ersten Stufe mindestens zwei, vorzugsweise jedoch vier oder mehr RO-Module parallel angeordnet, die unter Aufteilung des Brüdenkondensatstroms von diesem durchlaufen werden. Die Konzentratabläufe der RO-Module dieser ersten Stufe können dann zusammengefaßt und einem oder mehreren RO-Modulen einer zweiten Stufe zur weiteren bzw. erneuten Reinigung zugeführt werden usw.. Die Anzahl der Stufen hängt letztendlich zum einen von der Menge des zu reinigenden Brüdenkondensates bzw. damit der Anzahl der RO-Module der ersten Stufe und zum anderen vom gewünschten Reinigungsgrad bzw. Wirkungsgrad der gesamten Anlage ab. Damit ist eine leichte und zuverlässige Auslegung der erfindungsgemäßen Anlage möglich.

Welche Art einer semipermeablen Membran in der erfindungsgemäßen Anlage bzw. im erfindungsgemäßen Verfahren Verwendung findet, hängt insbesondere von der Art der zu entfernenden organischen Verunreinigungen ab. Die kennzeichnenden Faktoren sind dafür insbesondere das Molekulargewicht, die Molekülgröße, die räumliche Struktur und die Ionogenität der Moleküle der Verunreinigungen. Zur Abtrennung insbesondere der in Sudhausbrüdenkondensaten anfallenden organischen Verunreinigungen hat sich durch Versuche die Verwendung einer hochvernetzten aromatischen Polyamid-Composite-Membran als zweckmäßig und vorteilhaft erwiesen. Eine derartige Membran wird beispielsweise üblicherweise zur Meerwasserentsalzung verwendet. Als eigentliches RO-Modul wird vorzugsweise ein spiralförmig gewundenes Wickelmodul verwendet, das einen textilen Träger aufweist, der die eigentliche semipermeable Membran trägt. Diese Gestaltung bietet in an sich bekannter Weise insbesondere eine ausreichende mechanische Festigkeit des RO-Moduls für Betriebsdrücke im Bereich bis zu 70 bar und mehr.

Die erfindungsgemäße Anlage und das erfindungsgemäße Verfahren sind im Brauereibereich unter anderem auch für die Reinigung und Aufbereitung des beim CO₂-Wäscher aus dem Vorwäscher anfallenden Wassers geeignet.

Im folgenden ist die Erfindung anhand von lediglich Ausführungsbeispiele zeigenden Zeichnungen näher erläutert. Es zeigt
- **Fig. 1**: ein Blockschaltbild einer Anlage gemäß der vorliegenden Erfindung mit einem RO-Modul; und
- **Fig. 2**: ein Blockschaltbild einer erfindungsgemäßen Anlage mit mehreren RO-Modulen in Tannenbaumanordnung.

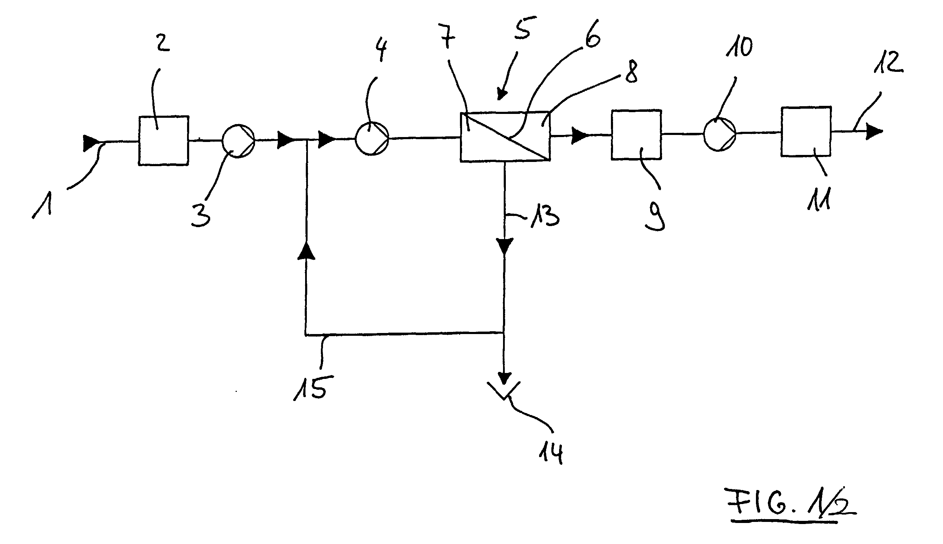

Die in **Fig. 1** dargestellte erfindungsgemäße Anlage weist zunächst einmal einen Zulauf 1 für das aus einem nicht dargestellten Pfannendunstkondensator stammende Brüdenkondensat auf. Der Zulauf 1 mündet in einen Vorlagebehälter 2, in dem das zu reinigende Kondensat zunächst gespeichert wird. Der Vorlagebehälter 2 kann dabei insbesondere die Funktion eines Pufferspeichers erfüllen, um einen kontinuierlichen Betrieb der erfindungsgemäßen Anlage zu gewährleisten. Mittels einer Vorlagepumpe 3 wird das zu reinigende Brüdenkondensat aus dem Vorlagebehälter 2 zur Druckpumpe 4 gefördert. Der durch die Vorlagepumpe 3 erzeugte Druck braucht dabei lediglich so hoch zu sein, daß ein sicherer Transport des zu reinigenden Brüdenkondensates zur Druckpumpe 4 sichergestellt ist.

Mittels der Druckpumpe 4 wird der Druck des zu reinigenden Brüdenkondensates auf den für den Betrieb des RO-Moduls 5 notwendigen Betriebsdruck gebracht, der in der Regel zwischen 30 und 60 bar, beim dargestellten Ausführungsbeispiel insbesondere bei 40 bar, liegt.

Im RO-Modul 5 ist, wie lediglich schematisch angedeutet ist, eine semipermeable Membran 6 angeordnet, die zur Reinigung des Brüdenkondensates durch einen Umkehr-Osmose-Vorgang dient. Die semipermeable Membran 6 teilt dabei das RO-Modul schematisch in zwei Kammern 7 und 8, wobei die Kammer 8 mit Wasser bzw. dem Permeat, d. h. mit einer Flüssigkeit geringer Konzentration insbesondere organischer Verunreinigungen, und die Kammer 7 mit dem zu reinigenden Brüdenkondensat, d. h. einer Flüssigkeit mit relativ hoher Konzentration organischer Verunreinigungen, gefüllt ist. Aufgrund des durch die Druckpumpe 4 aufgebrachten Druckes erfolgt ein Hindurchdiffundieren der Wasseranteile des Kondensates von der Kammer 7 durch die semipermeable Membran 6 in die Kammer 8.

Aus dem RO-Modul bzw. der Kammer 8 des RO-Moduls wird das so gewonnene Permeat, d. h. mehr oder weniger reines Wasser, einem Sammelbehälter 9 zugeführt. Dabei erfolgt der Transport bzw. die Speicherung des Permeates nahezu drucklos. Über eine Druckerhöhungspumpe 10 wird das Permeat aus dem Sammelbehälter 9 zu einer Aktivkohle-Filtereinheit 11 und durch diese hindurch gefördert, wobei diese Aktivkohle-Filtereinheit 11 im wesentlichen mehr oder weniger lediglich eine Sicherheitseinrichtung für nicht bestimmungsgemäß in der semipermeablen Membran 6 zurückgehaltene Verunreinigungen darstellt.

Nach dem Durchtritt durch die Aktivkohle-Filtereinheit 11 wird das Permeat über die Abgabeleitung 12 einer Wiederverwendung, gegebenenfalls nach Zwischenspeicherung, zugeführt. Die Druckerhöhungspumpe 10 dient zum einen zur Förderung des Permeates durch die Aktivkohle-Filtereinheit 11 und zum anderen zur Erhöhung des Druckes des Permeates auf einen Wert, mit dem dieses Permeat in ein entsprechendes Leitungssystem einspeisbar ist. Der Filtervorgang und das Einspeisen des Permeates in ein Leitungssystem erfolgen dabei vorzugsweise unter einem Druck zwischen 2 und 10 bar, insbesondere bei etwa 5 bar.

Das Konzentrat, d. h. im wesentlichen die die organischen Verunreinigungen aufweisenden Bestandteile des Brüdenkondensates, wird aus der Kammer 7 des RO-Moduls über eine Ablaufleitung 13 abgeführt. Dabei kann das Konzentrat unmittelbar in eine lediglich schematisch dargestellte Kanalisation 14 abgegeben werden. Um insbesondere den Gesamtwirkungsgrad der erfindungsgemäßen Anlage zu erhöhen, weist die Anlage eine Rückführungsleitung 15 für das Konzentrat auf. Diese Rückführungsleitung 15 zweigt dabei vom Ablauf 13 ab und ist mittels nicht dargestellter Ventileinrichungen zu- oder abschaltbar. Die Rückführungsleitung 15 mündet zwischen der Vorlagepumpe 3 und der Druckpumpe 4 in den Strom des zu reinigenden Kondensates und ist dort mittels ebenfalls nicht dargestellter Ventileinrichtungen zu- oder abschaltbar. Wird nun die Rückführungsleitung 15 sowohl der Abführleitung 13 als auch dem Kondensatstrom zugeschaltet, erfolgt eine Wiedereinleitung des in der Kammer 7 angefallenen Konzentrates in den Reinigungsstrom und damit eine erneute bzw. weitere Reinigung des Kondensates bzw. des Konzentrates. Durch wiederholte Rückführung des in der Kammer 7 angefallenen Konzentrates in den Reinigungskreislauf kann dabei in einfacher Weise ein Gesamtwirkungsgrad der Anlage von mehr als 90 % erreicht werden.

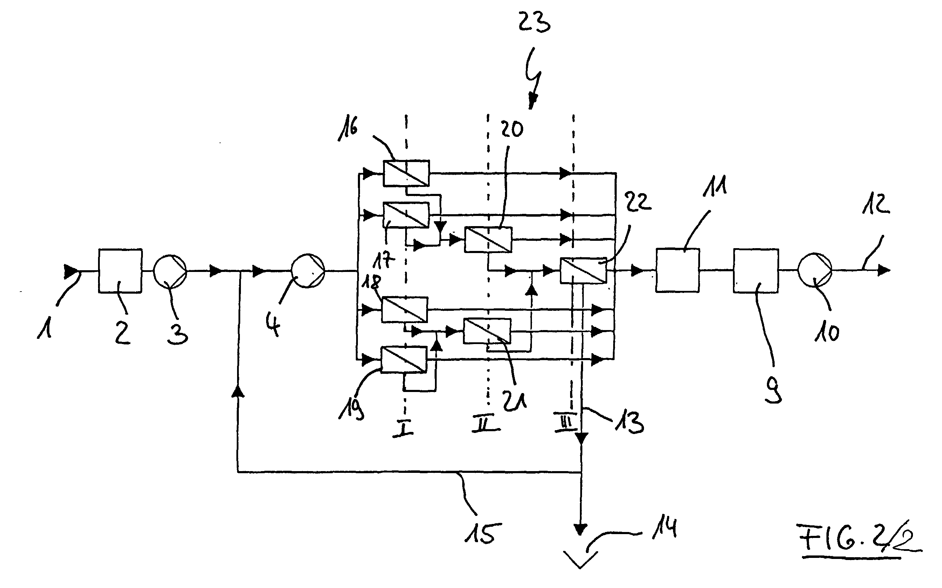

Das in **Fig. 2** dargestellte Ausführungsbeispiel einer erfindungsgemäßen Anlage zur Reinigung von Brüdenkondensaten entspricht in seinem grundsätzlichen Aufbau der Anlage gemäß **Fig. 1**. Das singuläre RO-Modul der Anlage nach **Fig. 1** ist jedoch ersetzt durch eine tannenbaumartige Anordnung 23 aus sieben im wesentlichen gleichen RO-Modulen 16, 17, 18, 19, 20, 21 und 22, die in drei nacheinander, bezogen auf die Durchflußrichtung des zu reinigenden Kondensates, plazierten Stufen I, II und III angeordnet sind.

Die erste Stufe I weist dabei vier parallel nebeneinander angeordnete RO-Module 16, 17, 18 und 19 auf, auf die sich der von der Druckpumpe 4 geförderte Strom der Brüdenkondensate verteilt. Bereits dadurch wird die Kapazität der gesamten Anlage, die im wesentlichen durch die Durchflußleistung der RO-Module bestimmt wird, verglichen mit der Anlage nach **Fig. 1** wesentlich erhöht.

In der zweiten Stufe II sind zwei RO-Module 20, 21 ebenfalls parallel nebeneinander angeordnet. Die Konzentratabläufe der RO-Module 16, 17 bzw. 18, 19 der ersten Stufe I münden dabei unmittelbar in das RO-Modul 20 bzw. 21 der zweiten Stufe II und werden dort einem erneuten Reinigungs- bzw. Filtervorgang unterzogen. In prinzipiell gleicher Weise münden die Konzentratabläufe der RO-Module 20, 21 der zweiten Stufe II in das RO-Modul 22 der dritten Stufe III. Nach dort erfolgter abermaliger Reinigung wird das Konzentrat über die Leitung 13 schließlich in die Kanalisation 14 abgegeben oder, falls gewünscht, über die Rückführungsleitung 15 erneut zur weiteren Reinigung in die RO-Modulanordnung 23 geführt. Das durch die RO-Module hindurchtretende Permeat wird jeweils unmittelbar über die Aktivkohle-Filtereinheit in den Sammelbehälter zur weiteren Verwendung beispielsweise als Brauwasser gegeben. Durch diese tannenbaumartige RO-Modulanordnung 23 ist in einfacher und leichter Weise ein hoher Reinigungswirkungsgrad der Anlage zu erreichen.

## Patentansprüche

1. Anlage zur Reinigung von bei der Bierherstellung anfallenden Brüdenkondensaten, wobei mindestens eine Druckpumpe (4) zur Druckbeaufschlagung des zu reinigenden Brüdenkondensates und mindestens ein eine semipermeable Membran (6) aufweisendes RO-Modul (5; 16 - 22), durch das das Brüdenkondensat mittels der Druckpumpe (4) unter Trennung in Permeat und Konzentrat förderbar ist, wobei ferner eine Ablaufleitung (13) für das Konzentrat zur mittelbaren oder unmittelbaren Ableitung in die Kanalisation (14) vorgesehen und das gereinigte Permeat zur Wiederverwendung sammelbar ist,
**dadurch gekennzeichnet,**
**dass** eine Abgabeleitung (12) vorgesehen ist, die die Anlage zur Reinigung des Brüdenkondensats mit der Betriebswasserversorgung einer Brauerei verbindet.

2. Anlage nach Anspruch 1,
**gekennzeichnet durch**
einen in Durchflußrichtung vor der Druckpumpe (4) angeördneten Vorlagebehälter (2) zur Speicherung des zu reinigenden Brüdenkondensates.

3. Anlage nach Anspruch 2,
**gekennzeichnet durch**
eine zwischen dem Vorlagebehälter (2) und der Druckpumpe (4) angeordnete Vorlagepumpe (3) zur Förderung des zu reinigenden Brüdenkondensates aus dem Vorlagebehälter (2) zur Druckpumpe (4).

4. Anlage nach einem der Ansprüche 1 bis 3,
**gekennzeichnet durch**
einen auf der Permeatablaufseite des RO-Moduls (5) angeordneten Sammelbehälter (9) für das **durch** die semipermeable Membran (6) hindurchgetretene Permeat.

5. Anlage nach einem der Ansprüche 1 bis 4,
**gekennzeichnet durch**
mindestens eine auf der Permeatablaufseite des RO-Moduls (5) angeordnete Aktivkohle-Filtereinheit (11), die vom Permeat durchströmbar ist.

6. Anlage nach einem der Ansprüche 1 bis 5,
**gekennzeichnet durch**
mindestens eine auf der Permeatablaufseite des RO-Moduls (5) angeordnete Druckerhöhungspumpe (10) für das Permeat.

7. Anlage nach Anspruch 6,
**dadurch gekennzeichnet,**
**daß** die Druckerhöhungspumpe (10), bezogen auf die Strömungsrichtung des Permeats, nach dem Sammelbehälter (9) angeordnet ist.

8. Anlage nach Anspruch 6 oder 7,
**dadurch gekennzeichnet,**
**daß** die Aktivkohle-Filtereinheit (11), bezogen auf die Strömungsrichtung des Permeats, nach der Druckerhöhungspumpe (10) angeordnet ist.

9. Anlage nach einem der Ansprüche 1 bis 8,
**gekennzeichnet durch**
eine zuschaltbare Rückführungsleitung (15) für das **durch** die semipermeable Membran (6) zurückgehaltene und aus dem RO-Modul (5) ausgetretene Konzentrat vor die Druckpumpe (4) zur erneuten Durchströmung des RO-Moduls (5).

10. Anlage nach einem der Ansprüche 1 bis 9,
**dadurch gekennzeichnet,**
**daß** das RO-Modul (5) ein vorzugsweise spiralförmig gewundenes Wickelmodul mit einem textilen Träger und der eigentlichen semipermeablen Membran (6) aufweist.

11. Anlage nach einem der Ansprüche 1 bis 10,
**dadurch gekennzeichnet,**
**daß** die semipermeable Membran (6) durch eine hochvernetzte aromatische Polyamid-Composite-Membran gebildet wird.

12. Anlage nach einem der Ansprüche 1 bis 11,
**dadurch gekennzeichnet,**
**daß** zwei oder mehr RO-Module (5) in Reihe hintereinander so angeordnet sind, daß der Konzentratablauf des jeweils vorgeschalteten RO-Moduls mittelbar oder unmittelbar in das jeweils folgende RO-Modul mündet.

13. Anlage nach einem der Ansprüche 1 bis 12,
**dadurch gekennzeichnet,**
**daß** eine Vielzahl von RO-Modulen (16 - 22) tannenbaumartig in Stufen (I, II, III) nacheinander angeordnet sind, wobei die Anzahl der RO-Module von Stufe zu Stufe in Durchflußrichtung gesehen abnimmt und die Konzentratabläufe der RO-Module (16 - 22) der jeweils vorgeschalteten Stufe unmittelbar oder mittelbar in mindestens ein RO-Modul der jeweils nachgeschalteten Stufe münden.

14. Verfahren zur Reinigung von bei der Bierherstellung anfallenden Brüdenkondensaten,
**gekennzeichnet durch**
folgende Verfahrensschritte:
- Erhöhung des Druckes des Kondensates mittels einer Druckpumpe (4);
- Förderung des unter Druck stehenden Kondensates an die semipermeable Membran (6) mindestens eines RO-Moduls (5);
- Ableitung des **durch** die semipermeable Membran (6) abgehaltenen Konzentrates mittelbar oder unmittelbar in die Kanalisation (14); und
- Ableitung des **durch** die semipermeable Membran (6) hindurchgetretenen Permeates zur Wiederverwendung.

15. Verfahren nach Anspruch 14,
**dadurch gekennzeichnet,**
**daß** der durch die Druckpumpe (4) erhöhte Druck des _{K}ondensates zwischen 30 und 60 bar, insbesondere 40 bar beträgt.

16. Verfahren nach Anspruch 14 oder 15,
**dadurch gekennzeichnet,**
**daß** vor der Erhöhung des Druckes mittels der Druckpumpe (4) das zu reinigende Brüdenkondensat in einem Vorlagebehälter (2) gespeichert oder gesammelt und von dort mittels einer Vorlagepumpe (3) zur Druckpumpe (4) gefördert wird.

17. Verfahren nach einem der Ansprüche 14 bis 16,
**dadurch gekennzeichnet,**
**daß** das an der semipermeablen Membran (6) zurückgehaltene Konzentrat zur Druckpumpe (4) zurückgeführt und wieder dem RO-Modul (5) zur erneuten Reinigung zugeleitet wird.

18. Verfahren nach einem der Ansprüche 14 bis 17,
**dadurch gekennzeichnet,**
**daß** das an der semipermeablen Membran (6) zurückgehaltene Konzentrat mindestens einem nachgeschalteten weiteren RO-Modul zur erneuten Reinigung zugeleitet wird.

19. Verfahren nach einem der Ansprüche 14 bis 18,
**dadurch gekennzeichnet,**
**daß** das Permeat vor seiner Wiederverwendung einem Filtervorgang, insbesondere in einem Aktivkohlefilter (11), unterzogen wird.

20. Verfahren nach Anspruch 19,
**dadurch gekennzeichnet,**
**daß** der Filtervorgang unter einem Permeatdruck zwischen 3 und 10 bar, insbesondere 5 bar, erfolgt.

## Claims

1. A system for purifying vapor condensate produced during beer manufacturing, said system being provided with at least one pressure pump (4) for pressurizing the vapor condensate to be purified and with at least one RO module (5; 16-22) comprising a semi-permeable membrane (6) through which the vapor condensate is pumpable by the pressure pump (4), being thereby separated into permeate and concentrate, further with a drain pipe (13) for the concentrate for indirectly or directly releasing said concentrate to the drainage piping (14), the purified permeate being collectable for re-use,
**characterized in**
**that** there is provided a delivery pipe (12) that connects the system for purifying the vapor condensate to the service water supply of a brewery.

2. The system in accordance with claim 1,
**characterized by**
a receiver tank (2) for storing the vapor condensate to be purified, said receiver tank being arranged in an upstream flow direction to the pressure pump (4).

3. The system in accordance with claim 2,
**characterized by**
a receiver pump (3) for removing the vapor condensate to be purified from the receiver tank (2) and delivering to the pressure pump (4), said receiver pump being disposed between the receiver tank (2) and the pressure pump (4).

4. The system in accordance with any of the claims 1 through 3,
**characterized by**
a collecting tank (9) for the permeate that has passed through the semi-permeable membrane (6), said collecting tank being disposed on the permeate discharge side of the RO module (5).

5. The system in accordance with any of the claims 1 through 4,
**characterized by**
at least one activated carbon filter (11) that is disposed on the permeate discharge side of the RO module (5) and through which the permeate is allowed to pass.

6. The system in accordance with any of the claims 1 through 5,
**characterized by**
at least one booster pump (10) for the permeate, said pump being disposed on the permeate discharge side of the RO module (5).

7. The system in accordance with claim 6,
**characterized in**
**that** the booster pump (10) is disposed behind the collecting tank (9) with respect to the flow direction of the permeate.

8. The system in accordance with claim 6 or 7,
**characterized in**
**that** the activated carbon filter (11) is disposed behind the booster pump (10) with respect to the flow direction of the permeate.

9. The system in accordance with any of the claims 1 through 8,
**characterized by**
a return pipe (15) for the concentrate that has been retained by the semi-permeable membrane (6) and that has been passed out of the RO module (5), said return pipe being connectable upstream of the pressure pump (4) for re-circulating the concentrate through the RO module (5).

10. The system in accordance with any of the claims 1 through 9,
**characterized in**
**that** the RO module (5) comprises a preferably spirally-wound module with a textile carrier and the actual semi-permeable membrane (6).

11. The system in accordance with any of the claims 1 through 10,
**characterized in**
**that** the semi-permeable membrane (6) is formed by a highly crosslinked aromatic polyamide composite membrane.

12. The system in accordance with any of the claims 1 through 11,
**characterized in**
**that** two or more RO modules (5) are arranged one behind the other in a row in such a manner that the concentrate drain pipe of the respective one of the upstream RO modules discharges indirectly or directly into the respective one of the RO modules coming next.

13. The system in accordance with any of the claims 1 through 12,
**characterized in**
**that** a plurality of RO modules (16-22) are arranged in stages (I, II, III) one after the other in a Christmas tree pattern, with the number of RO modules decreasing from one stage to the other when viewed in the flow direction, the concentrate drain pipes of the RO modules (16-22) of the respective one of the upstream stages discharging directly or indirectly into at least one RO module of the respective one of the downstream stages.

14. A method of purifying vapor condensate produced during beer manufacturing,
**characterized by**
the following method steps:
- increasing the pressure of the condensate by means of a pressure pump (4),
- delivering the pressurized condensate to the semi-permeable membrane (6) of at least one RO module (5);
- indirectly or directly releasing the concentrate that has been retained by the semi-permeable membrane (6) to the drainage piping (14); and
- discharging the permeate that has passed through the semi-permeable membrane (6) for re-use.

15. The method in accordance with claim 14,
**characterized in**
**that** the condensate pressure, which has been increased by the pressure pump (4), is between 30 and 60 bar and is more specifically 40 bar.

16. The method in accordance with claim 14 or 15,
**characterized in**
**that**, before the pressure is increased by means of the pressure pump (4), the vapor condensate to be purified is stored or collected in a receiver tank (2) from where it is delivered to the pressure pump (4) by means of a receiver pump (3).

17. The method in accordance with any of the claims 14 through 16,
**characterized in**
**that** the concentrate that has been retained at the semi-permeable membrane (6) is returned to the pressure pump (4) and supplied back to the RO module (5) for another purification step.

18. The method in accordance with any of the claims 14 through 17,
**characterized in**
**that** the concentrate that has been retained at the semi-permeable membrane (6) is supplied to at least one further downstream RO module for another purification step.

19. The method in accordance with any of the claims 14 through 18,
**characterized in**
**that** the permeate is subjected to a filtering process, more specifically in an activated carbon filter (11), prior to being reused.

20. The method in accordance with claim 19,
**characterized in**
**that** the filtering process is performed at a permeate pressure of between 3 and 10 bar, more specifically of 5 bar.

## Revendications

1. Station d'épuration des condensats d'évaporation résultant de la fabrication de la bière,
au moins une pompe (4) de mise en pression des condensats d'évaporation qu'il y a lieu d'épurer et au moins un module OI (5 ; 16-22) comportant une membrane semi-perméable (6) pour le passage des condensats d'évaporation refoulés par la pompe de mise en pression (4) étant prévus, le condensat étant ce faisant séparé en perméat et en concentré, une conduite d'évacuation (13) pour le concentré étant par ailleurs prévue pour évacuer directement ou indirectement le concentré dans la canalisation (14) et le perméat épuré étant susceptible d'être recueilli en vue de sa réutilisation,
**caractérisée en ce**
**qu'**une conduite de décharge (12) reliant la station d'épuration des condensats d'évaporation au système d'alimentation en eau industrielle est prévue.

2. Station selon la revendication 1,
**caractérisée par**
un réservoir collecteur (2) des condensats d'évaporation à épurer disposé en amont de la pompe (4) de mise en pression dans le sens de l'écoulement.

3. Station selon la revendication 2,
**caractérisée par**
une première pompe (3) qui est destinée à refouler les condensats d'évaporation à épurer depuis le réservoir collecteur (2) vers la pompe (4) de mise en pression et qui est disposée entre le réservoir collecteur (2) et la pompe (4) de mise en pression.

4. Station selon l'une quelconque des revendications 1 à 3,
**caractérisée par**
un récipient collecteur (9) qui est disposé sur le côté du module OI (5) sur lequel s'écoule le perméat et qui est destiné à recueillir le perméat après son passage à travers la membrane semi-perméable (6).

5. Station selon l'une quelconque des revendications 1 à 4,
**caractérisée par**
au moins un filtre à charbon actif (11) à travers lequel est destiné à passer le perméat, ledit filtre étant disposé sur le côté du module OI (5) sur lequel s'écoule le perméat.

6. Station selon l'une quelconque des revendications 1 à 5,
**caractérisée par**
au moins une pompe (10) pour augmenter la pression du perméat, ladite pompe étant disposée sur le côté du module OI (5) sur lequel s'écoule le perméat.

7. Station selon la revendication 6,
**caractérisée en ce**
**que**, par rapport au sens d'écoulement du perméat, la pompe (10) pour augmenter la pression est disposée en aval du récipient collecteur (9).

8. Station selon la revendication 6 ou 7,
**caractérisée en ce**
**que**, par rapport au sens d'écoulement du perméat, le filtre à charbon actif (11) est disposé en aval de la pompe (10) pour augmenter la pression.

9. Station selon l'une quelconque des revendications 1 à 8,
**caractérisée par**
une conduite de retour (15) pour refaire passer à travers le module OI (5) le concentré qui a été retenu par la membrane semi-perméable (6) et qui a quitté le module OI (5), ladite conduite étant apte à être raccordée en amont de la pompe (4) de mise en pression.

10. Station selon l'une quelconque des revendications 1 à 9,
**caractérisée en ce**
**que** le module OI (5) comporte de préférence un enroulement spiralé avec un support textile et la membrane semi-perméable (6) proprement dite.

11. Station selon l'une quelconque des revendications 1 à 10,
**caractérisée en ce**
**que** la membrane semi-perméable (6) est formée par une membrane en composite à base de polyamide aromatique hautement réticulé.

12. Station selon l'une quelconque des revendications 1 à 11,
**caractérisée en ce**
**que** deux ou plus de deux modules OI (5) sont montés en série les uns derrière les autres de telle sorte que la conduite d'évacuation du concentré du module OI respectivement disposé en amont débouche directement ou indirectement dans le module OI suivant.

13. Station selon l'une quelconque des revendications 1 à 12,
**caractérisée en ce**
**qu'**une pluralité de modules OI (16-22) sont disposés les uns derrière les autres par étages (I, II, III) en forme d'arête de poisson, le nombre de modules OI diminuant d'étage en étage dans le sens de l'écoulement et que les conduites d'évacuation du concentré des modules OI (16-22) de l'étage respectivement situé en amont débouchent directement ou indirectement dans au moins un module OI de l'étage suivant disposé en aval.

14. Procédé d'épuration des condensats d'évaporation résultant de la fabrication de la bière,
**caractérisé par**
les étapes suivantes :
- augmenter la pression du condensat au moyen d'une pompe (4) de mise en pression;
- refouler le condensat sous pression vers la membrane semi-perméable (6) d'au moins un module OI (5),
- évacuer directement ou indirectement dans la canalisation (14) le concentré retenu par la membrane semi-perméable (6) ; et
- évacuer le perméat après son passage à travers la membrane semi-perméable (6) en vue de sa réutilisation.

15. Procédé selon la revendication 14,
**caractérisé en ce**
**que** la pression du condensat, qui a été augmentée par la pompe (4) de mise en pression, est comprise entre 30 et 60 bar, et notamment est de l'ordre de 40 bar.

16. Procédé selon la revendication 14 ou 15,
**caractérisé en ce**
**que** les condensats d'évaporation à épurer sont stockés ou recueillis dans un réservoir collecteur (2) depuis lequel ils sont véhiculés vers la pompe (4) de mise en pression au moyen d'une première pompe (3) avant d'être mis à une pression plus élevée au moyen de la pompe de mise en pression (4).

17. Procédé selon l'une quelconque des revendications 14 à 16,
**caractérisé en ce**
**que** le concentré retenu par la membrane semi-perméable (6) est recirculé vers la pompe (4) de mise en pression et est acheminé une nouvelle fois vers le module OI (5) en vue d'une nouvelle épuration.

18. Procédé selon l'une quelconque des revendications 14 à 17,
**caractérisé en ce**
**que** le concentré retenu par la membrane semi-perméable (6) est acheminé vers au moins un autre module OI monté en aval en vue d'une nouvelle épuration.

19. Procédé selon l'une quelconque des revendications 14 à 18,
**caractérisé en ce**
**que** le perméat est filtré, notamment dans un filtre à charbon actif (11), avant d'être réutilisé.

20. Procédé selon la revendication 19,
**caractérisé en ce**
**que** le filtrage est effectué à une pression du perméat comprise entre 3 et 10 bar, notamment de l'ordre de 5 bar.
